# FASCICULE DE BREVET EUROPEEN

(11) **EP 1 598 271 B1**
(45) Date de publication et mention de la délivrance du brevet: **12.09.2007**
(21) Numéro de dépôt: 05290769.8
(22) Date de dépôt: 07.04.2005
(51) Int. Cl.: B64D 43/02, G01C 23/00

(54) **Indicateur de pilotage affichant les informations de poussée de l'aéronef**
Steuerungsanzeige zum Anzeigen von Schubinformationen eines Luftfahrzeuges
Pilot display for indicating thrust information of aircraft

(30) Priorité: 18.05.2004 FR 0405386
(43) Date de publication de la demande: 23.11.2005
(73) Titulaire: AIRBUS France, 31060 Toulouse (FR)
(72) Inventeur: Artini, Franck, 31000 Toulouse (FR); Demortier, Jean-Pierre, 32200 Maurens (FR); Bouchet, Christophe, 31000 Toulouse (FR)
(74) Mandataire: Hauer, Bernard

(56) Documents cités:
- US-A- 5 050 081
- US-B1- 6 262 674

## Description

La présente invention concerne un indicateur de pilotage pour un aéronef.

Un tel indicateur de pilotage est plus spécifiquement adapté à un avion, en particulier un avion de transport militaire, qui est en général très lourd et dont les temps de manoeuvre sont relativement longs.

Bien que non exclusivement, la présente invention s'applique plus particulièrement à un vol à basse altitude. On entend par vol à basse altitude, le vol le long d'une trajectoire de vol (à basse altitude) permettant à un aéronef de suivre au plus près le terrain survolé, notamment pour éviter de se faire repérer. Une telle trajectoire de vol à basse altitude est donc située à une hauteur de terrain qui est en général inférieure à une hauteur prédéterminée, par exemple 500 pieds (environ 150 mètres).

Une telle trajectoire de vol à basse altitude peut comporter des segments rectilignes de montée et de descente. Cette trajectoire de vol est calculée, en tenant compte notamment :
- d'une consigne de vitesse sélectionnée par l'équipage ;
- de la masse prédite de l'aéronef sur la trajectoire ;
- des capacités de montée et de descente maximales de l'aéronef (données par un modèle de performances usuel) ; et
- d'une poussée donnée, par exemple la poussée continue maximale MCT ("Maximum Continuous Thrust" en anglais) pour la consigne de montée et le ralenti (ou poussée au ralenti) pour la consigne de descente.

Dans ce cas, si la pente calculée de la trajectoire de vol n'est pas correcte, c'est-à-dire si elle est plus grande que la pente maximale susceptible d'être atteinte (notamment en raison d'un modèle de performances de l'aéronef qui est trop optimiste, de conditions météorologiques qui n'ont pas été prises en compte correctement, ou d'une erreur dans le calcul de la pente de montée maximale), lorsque l'aéronef est commandé par un système de commande automatique de poussée ("Auto-thrust" en anglais), la poussée est augmentée de manière à atteindre et conserver la pente demandée, tout en maintenant la consigne de vitesse sélectionnée. La poussée peut alors augmenter jusqu'à atteindre la valeur limite de poussée maximale dudit système de commande automatique de poussée. Lorsque cette valeur limite est atteinte, la vitesse commence à baisser, ce qui peut bien entendu mener à une situation très dangereuse, notamment lorsqu'en baissant la vitesse de l'aéronef s'approche de la vitesse de décrochage. De plus, en général, la manette de gaz ne se déplace pas sur le pylône, lorsque la poussée est ainsi ajustée automatiquement.

Par conséquent, le pilote de l'aéronef ne dispose pas d'informations suffisantes concernant notamment la poussée engendrée, dans une telle situation qui est susceptible d'être très dangereuse, comme indiqué ci-dessus.

La présente invention a pour objet de remédier à ces inconvénients. Elle concerne un indicateur de pilotage pour un aéronef, permettant d'apporter à un pilote de l'aéronef une aide précieuse à la surveillance de la poussée.

A cet effet, selon l'invention, ledit indicateur de pilotage, du type comportant :
- un ensemble de sources d'informations ;
- une unité de calcul qui est reliée audit ensemble de sources d'informations ; et
- un dispositif de visualisation qui comporte au moins un écran de visualisation et qui est relié à ladite unité de calcul,
est remarquable en ce que :
- ladite unité de calcul détermine, à partir d'informations issues dudit ensemble de sources d'informations, au moins une information de poussée effective d'au moins un moteur de l'aéronef ; et
- ledit dispositif de visualisation est un dispositif de visualisation tête haute et présente, sur l'écran de visualisation, au moins un moyen d'indication qui indique ladite information de poussée effective, qui est associé à une échelle de poussée, et qui est présenté, avec ladite échelle de poussée, en surimpression de l'environnement existant à l'avant de l'aéronef (à savoir une présentation par moteur ou une présentation globale pour tous les moteurs).

Ainsi, grâce à l'invention, le pilote dispose d'une information de poussée effective, précisée ci-dessous.

La présentation de cette information de poussée effective apporte une aide précieuse à la surveillance du comportement de l'aéronef, en particulier lorsqu'il est piloté automatiquement à l'aide d'un système automatique de commande de poussée, comme indiqué précédemment. Cette présentation d'une information de poussée effective est également intéressante, lorsqu'un pilote réalise le pilotage de l'aéronef en regardant à travers ledit dispositif de visualisation tête haute, et en commandant manuellement la poussée. Par conséquent, l'indicateur de pilotage conforme à l'invention apporte un confort certain au pilotage et augmente la sécurité du vol.

Ladite unité de calcul détermine, comme information de poussée effective, la poussée actuelle moyenne de tous les moteurs de l'aéronef, et ledit dispositif de visualisation présente, sur ledit écran de visualisation, un seul moyen d'indication qui indique ladite poussée actuelle moyenne.

Ladite échelle de poussée comporte :
- une première limite de poussée minimale d'un système de commande automatique de poussée ; et
- une seconde limite de poussée maximale d'un système de commande automatique de poussée (ou de la poussée utilisée pour calculer la pente).

En outre, avantageusement, ladite échelle de poussée comporte, de plus, une limite auxiliaire de poussée maximale disponible à partir des moteurs de l'aéronef.

Par ailleurs, de façon avantageuse, ledit dispositif de visualisation présente, de plus, sur ledit écran de visualisation, associé à ladite échelle de poussée, un moyen d'indication auxiliaire indiquant une poussée commandée.

En outre, dans un mode de réalisation particulier, ledit ensemble de sources d'informations fournit à ladite unité de calcul au moins des valeurs de poussée relatives, respectivement :
- à la poussée courante effective, engendrée par au moins un moteur de l'aéronef ;
- à des poussées minimale et maximale d'un système de commande automatique de poussée ; et
- à une poussée maximale disponible.

Dans ce cas, de préférence, ladite valeur de poussée relative à la poussée courante effective engendrée par un moteur, représente la valeur suivante:
- le couple réel dudit moteur.

Les figures du dessin annexé feront bien comprendre comment l'invention peut être réalisée. Sur ces figures, des références identiques désignent des éléments semblables.
La figure 1 est le schéma synoptique d'un indicateur de pilotage conforme à l'invention.
Les figures 2 et 3 illustrent une visualisation mise en oeuvre par un indicateur de pilotage, conformément à un premier mode de réalisation, dans une première et une seconde variantes respectivement.

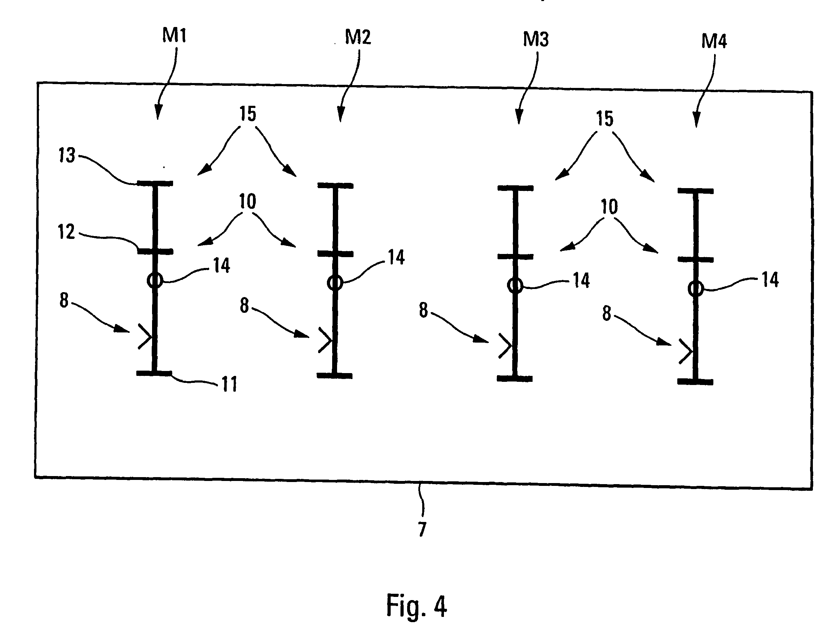

La figure 4 illustre une visualisation mise en oeuvre par un indicateur de pilotage, conformément à un second mode de réalisation.

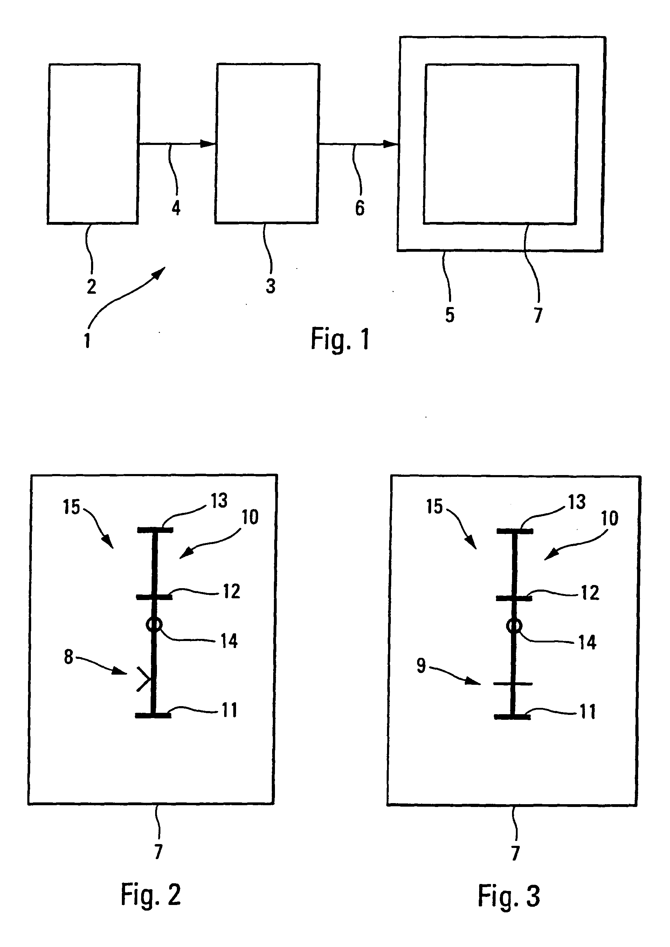

L'indicateur de pilotage 1 conforme à l'invention et représenté schématiquement sur la figure 1 est destiné à aider un pilote d'un aéronef, en particulier d'un avion de transport militaire, lors du pilotage de cet aéronef.

Pour ce faire, ledit indicateur de pilotage 1 qui est embarqué sur l'aéronef, comporte :
- un ensemble 2 de sources d'informations, précisé ci-dessous ;
- une unité de calcul 3 qui est reliée par une liaison 4 audit ensemble 2 de sources d'informations ; et
- un dispositif 5 qui est relié par une liaison 6 à ladite unité de calcul 3 et qui comporte un écran de visualisation 7.

Selon l'invention :
- ledit ensemble 2 de sources d'informations fournit à ladite unité de calcul 3 au moins des valeurs de poussée relatives, respectivement :
   ■ à la poussée courante effective engendrée par au moins un moteur de l'aéronef. Dans un mode de réalisation préféré, ladite valeur de poussée relative à la poussée courante effective engendrée par un moteur, représente l'une des valeurs suivantes (reçue directement du moteur ou d'un moyen de contrôle usuel du moteur) :
      * le régime N1 du compresseur de basse pression de ce moteur ;
      * le rapport de pressions moteur EPR ("Engine Pressure Ratio" en anglais) de ce moteur ;
      * le couple réel dudit moteur ;
   ■ à des poussées minimale et maximale d'un système de commande automatique de poussée ; et
   ■ à une poussée maximale disponible ;
- ladite unité de calcul 3 détermine, à partir au moins des informations précitées issues dudit ensemble 2 de sources d'informations, au moins une information de poussée effective d'au moins un moteur de l'aéronef ; et
- ledit dispositif 5 est un dispositif de visualisation tête haute et présente, sur l'écran de visualisation 7, au moins un moyen d'indication 8, 9 :
   ■ qui indique ladite information de poussée effective ;
   ■ qui est associé à une échelle de poussée 10 précisée ci-dessous ; et
   ■ qui est présenté, avec ladite échelle de poussée 10, en surimpression de l'environnement existant à l'avant de l'aéronef, comme représenté par exemple sur les figures 2 et 3.

Dans une première variante de visualisation représentée sur la figure 2, ledit moyen d'indication 8 est illustré par une flèche ("échelle de perroquet"), tandis que dans une seconde variante de visualisation représentée sur la figure 3, ledit moyen d'indication 9 est illustré par une barrette.

De plus, ladite échelle de poussée 10 qui illustre le domaine de poussée d'un système de commande automatique de poussée usuel, c'est-à-dire le domaine de valeurs possibles de la poussée lorsque ce système de commande automatique de poussée est actif, comporte :
- une première limite 11, par exemple une barrette, illustrant la poussée minimale dudit système de commande automatique de poussée, de préférence la poussée au ralenti ; et
- une seconde limite 12, par exemple une barrette, représentant la poussée maximale dudit système de commande automatique de poussée, de préférence la poussée à pente maximale ou la poussée continue maximale MCT.

Ladite échelle de poussée 10 comporte de plus une limite auxiliaire 13, par exemple également une barrette, indiquant la poussée maximale disponible à partir des moteurs de l'aéronef, notamment une poussée de type TOGA ("Take-Off/Go-Around" en anglais).

Par ailleurs, l'indicateur de pilotage 1 conforme à l'invention présente également un moyen d'indication auxiliaire 14, par exemple un cercle, qui indique sur l'échelle de poussée 10 la poussée commandée, c'est-à-dire la poussée correspondant à la commande adressée au(x) moteur(s). En comparant ledit moyen d'indication 8, 9 et ledit moyen d'indication auxiliaire 14, un pilote connaît la réponse du ou des moteurs à la commande de poussée qu'il a effectuée. Il sait ainsi comment l'aéronef se situe sur la pente : pente correcte ou pente incorrecte, c'est-à-dire trop forte pour l'aéronef (dans ce cas, la poussée demandée au moteur pour tenir cette pente est supérieure à la poussée de calcul).

L'échelle de poussée 10 et les éléments qui s'y trouvent (limites 11 à 13, moyens d'indication 8, 9, 14) forment un ensemble indicateur 15.

La présente invention est particulièrement intéressante lorsque l'aéronef est guidé, automatiquement ou manuellement, le long d'une trajectoire de vol qui est calculée à partir de consignes de poussée et de vitesse.

Plus particulièrement, bien que non exclusivement, la présente invention s'applique au guidage le long d'une trajectoire de vol à basse altitude, comportant une pluralité de segments successifs de montée et de descente qui sont limités par des pentes de montée et de descente maximales, calculées à partir :
- d'un modèle de performances de l'aéronef ;
- de la masse prédite de l'aéronef sur la trajectoire de vol ; et
- d'une consigne de vitesse sélectionnée par le pilote, lorsque l'aéronef est commandé par un système de commande automatique de poussée,
tout en supposant qu'un moteur est en panne (de sorte que l'aéronef peut continuer à voler le long de la trajectoire, même en cas de panne d'un moteur), et en prenant en compte la poussée continue maximale pour les autres moteurs (non supposés en panne). De plus, les pentes de ces segments rectilignes sont ajustés, entre les pentes maximales précitées, de manière à ce que l'aéronef vole au plus près au-dessus du terrain, en fonction de ses performances.

L'indicateur de pilotage 1 conforme à l'invention apporte une aide précieuse au pilotage :
- qui, lorsque le système de commande automatique de poussée est actif (engendrant une commande active de la poussée des moteurs pour maintenir la trajectoire et la vitesse demandées), permet au pilote de surveiller, à travers ledit dispositif de visualisation 5 tête haute, ladite information de poussée effective (moyen d'indication 8, 9), notamment en la comparant à la poussée théorique commandée (moyen d'indication auxiliaire 14) qui a été utilisée pour calculer la pente demandée. Ceci évite au pilote de surveiller un écran tête basse et d'avoir à bouger continuellement la tête de haut en bas, et inversement, lors du pilotage ; et
- qui informe le pilote sur ladite information de poussée effective, lorsque ce dernier commande manuellement la poussée (en déplaçant la manette de gaz). Ceci évite également au pilote d'avoir à bouger sans cesse la tête, puisqu'il connaît la position de la manette de gaz en regardant le moyen d'indication auxiliaire 14 à travers le dispositif de visualisation 5 tête haute, ainsi que la réponse de l'aéronef (moyen d'indication 8, 9).

Comme représenté sur les figures 2 et 3, ladite unité de calcul 3 détermine, comme information de poussée effective, la poussée actuelle moyenne de tous les m moteurs M1, M2, M3 et M4 de l'aéronef (m étant un entier supérieur à 1), et ledit dispositif de visualisation 5 présente, sur ledit écran de visualisation 7, un seul moyen d'indication 8, 9 qui indique ladite poussée actuelle moyenne (et donc un seul ensemble indicateur 15).

## Revendications

1. Indicateur de pilotage pour un aéronef, ledit indicateur de pilotage (1) comportant :
- un ensemble (2) de sources d'informations ;
- une unité de calcul (3) qui est reliée audit ensemble (2) de sources d'informations et qui détermine, à partir d'informations issues dudit ensemble (2) de sources d'informations, au moins une information de poussée effective d'au moins un moteur (M1, M2, M3, M4) de l'aéronef ; et
- un dispositif de visualisation (5) qui est relié à ladite unité de calcul (3) et qui présente, sur un écran de visualisation (7), au moins un moyen d'indication (8, 9) qui indique ladite information de poussée effective et qui est associé à une échelle de poussée (10),
**caractérisé en ce que** ladite unité de calcul (3) détermine, comme information de poussée effective, la poussée actuelle moyenne de tous les moteurs (M1, M2, M3, M4) de l'aéronef, **en ce que** ledit dispositif de visualisation (5) est un dispositif de visualisation tête haute qui présente ledit moyen d'indication (8, 9) et ladite échelle de poussée (10), en surimpression de l'environnement existant à l'avant de l'aéronef, **en ce que** ledit dispositif de visualisation (5) présente, sur ledit écran de visualisation (7), un seul moyen d'indication (8, 9) qui indique ladite poussée actuelle moyenne, et **en ce que** ladite échelle de poussée (10) illustre le domaine de poussée d'un système de commande automatique de poussée et comporte :
- une première limite (11) de poussée minimale dudit système de commande automatique de poussée ; et
- une seconde limite (12) de poussée maximale dudit système de commande automatique de poussée.

2. Indicateur de pilotage selon la revendication 1,
**caractérisé en ce que** ladite échelle de poussée (10) comporte, de plus, une limite auxiliaire (13) de poussée maximale disponible à partir des moteurs (M1, M2, M3, M4) de l'aéronef

3. Indicateur de pilotage selon l'une des revendications 1 et 2,
**caractérisé en ce que** ledit dispositif (5) de visualisation présente, de plus, sur ledit écran de visualisation (7), associé à ladite échelle de poussée (10), un moyen d'indication auxiliaire (14) indiquant une poussée commandée.

4. Indicateur de pilotage selon l'une des revendications 1 à 3,
**caractérisé en ce que** ledit ensemble (2) de sources d'informations fournit à ladite unité de calcul (3) au moins des valeurs de poussée relatives, respectivement :
- à la poussée courante effective, engendrée par au moins un moteur de l'aéronef ;
- à des poussées minimale et maximale d'un système de commande automatique de poussée ; et
- à une poussée maximale disponible.

5. Indicateur de pilotage selon la revendication 4,
**caractérisé en ce que** ladite valeur de poussée relative à la poussée courante effective engendrée par un moteur, représente le couple réel dudit moteur.

6. Aéronef,
**caractérisé en ce qu'**il comporte un indicateur de pilotage (1) tel que celui spécifié sous l'une quelconque des revendications 1 à 5.

## Claims

1. A flight control indicator for an aircraft, said flight control indicator (1) comprising:
- a set (2) of information sources;
- a computation unit (3) which is connected to said set (2) of information sources and which determines, on the basis of information emanating from said set (2) of information sources, at least one item of information regarding actual thrust of at least one engine (M1, M2, M3, M4) of the aircraft; and
- a display device (5) which is connected to said computation unit (3) and which presents, on the display screen (7), at least one means of indication (8, 9) which indicates said item of information regarding actual thrust and which is associated with a thrust scale (10),
**characterized in that** said computation unit (3) determines, as item of information regarding actual thrust, the mean current thrust of all the engines (M1, M2, M3, M4) of the aircraft, **in that** said display device (5) is a head-up display device which presents said means of indication (8, 9) and said thrust scale (10), superimposed on the environment prevailing in front of the aircraft, **in that** said display device (5) presents, on said display screen (7), a single means of indication (8, 9) which indicates said mean current thrust, and **in that** said thrust scale (10) illustrates the thrust domain of an automatic thrust control system and comprises:
- a first limit (11) of minimum thrust of said automatic thrust control system; and
- a second limit (12) of maximum thrust of said automatic thrust control system.

2. The flight control indicator as claimed in claim 1,
**characterized in that** said thrust scale (10) furthermore includes, an auxiliary limit (13) of maximum thrust available on the basis of the engines (M1, M2, M3, M4) of the aircraft.

3. The flight control indicator as claimed in one of claims 1 and 2,
**characterized in that** said display device (5) presents, moreover, on said display screen (7), associated with said thrust scale (10), an auxiliary means of indication (14) indicating a commanded thrust.

4. The flight control indicator as claimed in any one of claims 1 to 3,
**characterized in that** said set (2) of information sources supplies said computation unit (3) with at least thrust values relating, respectively:
- to the actual effective thrust, engendered by at least one engine of the aircraft;
- to minimum and maximum thrusts of an automatic thrust control system; and
- to a maximum available thrust.

5. The flight control indicator as claimed in claim 4,
**characterized in that** said thrust value relating to the actual effective thrust engendered by an engine, represents the true torque of said engine.

6. An aircraft,
**characterized in that** it comprises a flight control indicator (1) such as that specified under any one of claims 1 to 5.

## Patentansprüche

1. Steuerungsanzeige für ein Flugzeug, wobei die Steuerungsanzeige (1) Folgendes aufweist:
- eine Gruppe (2) von Informationsquellen;
- eine Rechnereinheit (3), die mit der Gruppe (2) von Informationsquellen verbunden ist, und die anhand von Informationen, die von der Gruppe (2) von Informationsquellen stammen, mindestens eine Information über den tatsächlichen Schub von mindestens einem Triebwerk (M1, M2, M3, M4) des Flugzeugs bestimmt; und
- ein Anzeigegerät (5), das mit der Rechnereinheit (3) verbunden ist, und das auf einem Bildschirm (7) mindestens ein Anzeigemittel (8, 9) darstellt, das die Information über den tatsächlichen Schub angibt, und das mit einer Schubskala (10) verknüpft ist,
**dadurch gekennzeichnet, dass** die Rechnereinheit (3) als Information über den tatsächlichen Schub den aktuellen durchschnittlichen Schub von allen Triebwerken (M1, M2, M3, M4) des Flugzeugs bestimmt, dass das Anzeigegerät (5) ein Head-Up-Display ist, weiches das Anzeigemittel (8, 9) und die Schubskala (10) in Überlagerung der vor dem Flugzeug existierenden Umgebung darstellt, dass das Anzeigegerät (5) auf dem Bildschirm (7) ein einziges Anzeigemittel (8, 9) darstellt, das den aktuellen durchschnittlichen Schub angibt, und dass die Schubskala (10) den Schubbereich einer automatischen Schubkontrolle darstellt und Folgendes aufweist:
- eine erste Grenze (11) für einen minimalen Schub der automatischen Schubkontrolle; und
- eine zweite Grenze (12) für einen maximalen Schub der automatischen Schubkontrolle.

2. Steuerungsanzeige nach Anspruch 1,
**dadurch gekennzeichnet, dass** die Schubskala (10) ferner eine Hilfsgrenze (13) für einen maximalen Schub aufweist, der von den Triebwerken (M1, M2, M3, M4) des Flugzeugs verfügbar ist.

3. Steuerungsanzeige nach einem der Ansprüche 1 bis 2,
**dadurch gekennzeichnet, dass** das Anzeigegerät (5) ferner auf dem Bildschirm (7), verknüpft mit der Schubskala (10), ein Hilfsanzeigemittel (14) darstellt, das einen angeordneten Schub angibt.

4. Steuerungsanzeige nach einem der Ansprüche 1 bis 3,
**dadurch gekennzeichnet, dass** die Gruppe (2) von Informationsquellen an die Rechnereinheit (3) mindestens Schubwerte liefert, die sich jeweils auf Folgendes beziehen:
- auf den aktuellen tatsächlichen Schub, der von mindestens einem Triebwerk des Flugzeugs erzeugt wird;
- auf den minimalen und maximalen Schub einer automatischen Schubkontrolle; und
- auf einen maximalen verfügbaren Schub.

5. Steuerungsanzeige nach Anspruch 4,
**dadurch gekennzeichnet, dass** der Schubwert, der sich auf den aktuellen tatsächlichen Schub bezieht, der von einem Triebwerk erzeugt wird, die tatsächliche Drehzahl des Triebwerks darstellt.

6. Flugzeug,
**dadurch gekennzeichnet, dass** es eine Steuerungsanzeige (1) der Art aufweist, wie sie unter einem der Ansprüche 1 bis 5 beschrieben wird.
